# EUROPÄISCHE PATENTSCHRIFT

(11) **EP 3 130 097 B1**
(45) Veröffentlichungstag und Bekanntmachung des Hinweises auf die Patenterteilung: **27.11.2024**
(21) Anmeldenummer: 15718809.5
(22) Anmeldetag: 09.04.2015
(51) Int. Cl.: H04L 1/08, H04L 1/22, H04L 1/00

(54) **VERFAHREN FÜR EIN REDUNDANTES ÜBERTRAGUNGSSYSTEM MIT PRP UND MEHRFACHEM DATENPAKETVERSAND**
METHOD FOR A REDUNDANT TRANSMISSION SYSTEM WITH PRP AND MULTIPLE DATA PACKET SENDING
PROCÉDÉ POUR UN SYSTÈME DE TRANSMISSION REDONDANT AVEC PRP ET ENVOI MULTIPLE DE PAQUET DE DONNÉES

(30) Priorität: 09.04.2014 DE 102014206873
(43) Veröffentlichungstag der Anmeldung: 15.02.2017
(73) Patentinhaber: Hirschmann Automation and Control GmbH, 72654 Neckartenzlingen (DE)
(72) Erfinder: HEER, Tobias, 72636 Frickenhausen (DE)
(74) Vertreter: Greif, Thomas
(86) Internationale Anmeldenummer: PCT/EP2015/057784
(87) Internationale Veröffentlichungsnummer: WO 2015/155314

(56) Entgegenhaltungen:
- DE-A1- 102011 084 344
- DE-A1- 19 833 292
- US-A1- 2010 085 964

## Beschreibung

Die Erfindung betrifft ein Verfahren zum Betreiben eines Übertragungssystems, das ein erstes Netzwerk und zumindest ein weiteres Netzwerk aufweist, wobei zwischen diesen zumindest zwei Netzwerken dadurch Daten ausgetauscht werden, dass Daten des ersten Netzwerkes Verdopplungsmitteln zugeführt werden, wobei die zugeführten Daten über zumindest zwei Übertragungsstrecken drahtlos mittels PRP zu Separiermitteln übertragen und von den Separiermitteln an das angeschlossene weitere Netzwerk weitergeleitet werden.

Solche bekannten Übertragungssysteme finden Anwendung in sicherheitskritischen Fällen bei verfahrenstechnischen Anlagen, stationären oder mobilen Arbeitseinrichtungen, beispielsweise bei Arbeitsfahrzeugen wie Krane oder dergleichen.

Es ist dabei wichtig, dass Daten zuverlässig von dem ersten Netzwerk zu dem zumindest weiteren Netzwerk übertragen werden. Eine solche sicherheitskritische Datenübertragung ist besonders dann wichtig, wenn die Daten über eine drahtlose Übertragungsstrecke übertragen werden. Hierzu hat es schon eine Verbesserung derart gegeben, dass nicht nur eine Übertragungsstrecke, sondern zumindest zwei, vorzugsweise genau zwei Übertragungsstrecken für diese Sicherheitsanwendung (auch Safety-Anwendung genannt) eingesetzt werden. Eine weitere Verbesserung dieser redundanten Datenübertragung hat dadurch stattgefunden, dass sie drahtlos, das heißt über Funk oder Licht, mittels des PRP (Parallel Redundancy Protocol), welches ein Layer-2-Redundanzverfahren ist, welches von höheren Schichten unabhängig ist und sich vor allen Dingen für Echtzeit-Ethernet-Mechanismen eignet, eingesetzt wird.

Unter Sicherheitsaspekten arbeitet ein solches Übertragungssystem zwar schon zufriedenstellend, weil Redundanz der beiden Übertragungsstrecken gegeben ist. So kann beispielsweise dann, wenn eine drahtlose Übertragungsstrecke gestört ist oder ausfällt, die zumindest zweite Übertragungsstrecke genutzt werden, um die Datenübertragung von dem ersten zu dem weiteren Netzwerk sicherzustellen.

Dabei ist jedoch nicht auszuschließen, dass trotz dieser Redundanz die Datenübertragung zwischen den beiden Netzwerken unter sicherheitskritischen Aspekten in unzulässiger Weise gestört wird.

Aus der DE 198 33 292 A1 ist ein Verfahren zur kontaktlosen Übertragung von Daten bekannt, wobei von einer Sendeeinheit eine Information I, welche die zu übertragenden Daten beinhaltet, an eine Empfangseinheit übermittelt wird, wobei die zu übermittelnde Information I von der Sendeeinheit in Form von Information I1 bis Information In mehrmals ausgesandt wird, wobei weiterhin die zu übermittelnden Informationen I1 bis In von der Empfangseinheit empfangen werden und an eine Datenverarbeitungseinheit weitergeleitet werden, wobei in der Datenverarbeitungseinheit jede empfangene Information I gespeichert und mit den anderen empfangenen Informationen I verglichen wird, und wobei bei Übereinstimmung der einzelnen empfangenen Informationen I1 bis In die Übermittlung der Information I als fehlerfrei eingestuft wird.

Die DE 10 2011 084 344 A1 betrifft ein Verfahren zur Laufzeitoptimierung bei paketorientierter Mobilfunkübertragung von Datentelegrammen zwischen Schienenfahrzeugen und ortsfesten Streckeneinrichtungen, zwischen Schienenfahrzeugen und/oder zwischen ortsfesten Streckeneinrichtungen für ein ETCS (European Train Control System) ab Level 2, bei dem die Datentelegramme sendeseitig mehrfach zeitversetzt und/oder über mehrere Übertragungskanäle, deren Störverhalten zeitlich und/oder kanalbezogen wenig oder nicht korreliert ist, als Kopien gesendet werden und empfangsseitig Duplikate verworfen und die Datentelegramme in der ursprünglichen Reihenfolge reorganisiert werden.

Die US 2010/085964 A1 beschreibt ein Verfahren zum Übertragen von Daten mithilfe von Datenpaketen und umfasst das Aufteilen eines Datenabschnitts des Datenpakets in zwei oder mehr Datensegmente, die jeweils einen entsprechenden Prüfabschnitt aufweisen. Das Datenpaket kann auch über zwei oder mehr logische Kommunikationskanäle kommuniziert werden. Die Reihenfolge der Datenabschnitte in einem Kommunikationskanal kann sich von der Reihenfolge der Datenabschnitte in einem zweiten Kommunikationskanal unterscheiden. Den jeweiligen Datenabschnitten können gleiche oder unterschiedliche Prüfabschnitte zugeordnet sein.

Der Erfindung liegt daher die Aufgabe zugrunde, ein Verfahren zum Betreiben eines Übertragungssystems unter sicherheitskritischen Aspekten deutlich zu verbessern.

Diese Aufgabe wird durch die Merkmale des Patentanspruches 1 gelöst.

Es ist erfindungsgemäß vorgesehen, dass die Daten als Datenpakete übertragen werden und jedes Datenpaket mehrfach über die gleiche Übertragungsstrecke übertragen wird. Dabei wird unterstellt, dass für den Fall, dass ein einzelnes Datenpaket auf dieser Übertragungsstrecke verloren geht, zumindest sein Nachfolger, das heißt also das folgende Datenpaket, fehlerfrei übertragen wird. Diese Übertragungsweise wird von PRP unterstütz. In vorteilhafter Weise kann also hingenommen werden, dass ein Datenpaket auf einer Übertragungsstrecke aus welchen Gründen auch immer verloren geht und das zumindest danach noch nochmals geschickte Datenpaket fehlerfrei übertragen wird. Hier wird erfindungsgemäß ergänzend noch an einen Rückkopplungsmechanismus gedacht, der dann das erneute Senden von Datenpaketen dann unterbindet, wenn ein Datenpaket als fehlerfrei übertragen erkannt worden ist.

In Weiterbildung der Erfindung wird jedes Datenpaket mindestens zwei Mal über die gleiche Übertragungsstrecke übertragen. Hierbei wird unterstellt, dass das erste auf die Übertragungsstelle geschickte Datenpaket aufgrund irgendeiner Störung verloren geht und das zweite Datenpaket, das direkt danach gesendet wurde, fehlerfrei ankommt. Anstelle dessen ist es selbstverständlich denkbar, dass jedes Datenpaket mehr als zwei Mal über die gleiche Übertragungsstrecke übertragen wird. Hier kann also daran gedacht werden, dass jedes Datenpaket dreimal, viermal und noch mehrmals über die gleiche Übertragungsstrecke übertragen wird.

Um einen Kompromiss hinsichtlich der Übertragungszeit und der Redundanz zu erzielen, ist es in besonders vorteilhafter Weise vorgesehen, dass jedes Datenpaket genau dreimal über die gleiche Übertragungsstrecke übertragen wird. Damit besteht die Möglichkeit, dass zwei von den drei gesendeten gleichen Datenpaketen auf der gleichen Übertragungsstrecke aufgrund einer Störung verloren gehen können, sodass das dritte Datenpaket ankommt. Dabei wird unterstellt, dass es ausreichend ist, drei gleiche Datenpakete hintereinander über die gleiche Übertragungsstrecke zu übertragen und dabei den Verlust zweier von drei Datenpaketen hinzunehmen. Dadurch wird eine ausreichend hohe Redundanz bei gleichzeitig schneller Datenübertragung gewährleistet.

Bezüglich der vorstehend beschriebenen Art und Weise der Übertragung der Datenpakete über die gleiche Übertragungsstrecke wird dabei unterstellt, dass mindestens zweimal hintereinander über die gleiche Übertragungsstrecke das gleiche Datenpaket übertragen wird. Kommt das erste auf die Übertragungsstrecke geschickte Datenpaket fehlerfrei an, kann das zweite Datenpaket verworfen werden. Gleiches gilt auch für den Fall, dass mehr als zwei gleiche Datenpakete hintereinander auf die Übertragungsstrecke geschickt worden sind. Geht das erste oder das erste und zumindest ein weiteres folgendes Datenpaket verloren, wird das darauf folgende Datenpaket in dem weiteren Netzwerk verwendet.

Die gleiche Vorgehensweise erfolgt nicht nur über die eine Übertragungsstrecke, sondern auch über die zumindest weitere Übertragungsstrecke, vorzugsweise über die beiden Übertragungsstrecken, sodass nur zwei solcher Übertragungsstrecken vorhanden sind. In solchen Fällen kann daran gedacht werden, gleichartige Datenpakete hintereinander gleichzeitig oder zeitversetzt oder auf unterschiedliche Art und Weise auf die zumindest zwei Übertragungsstrecken, vorzugsweise genau die beiden Übertragungsstrecken zu schicken.

In Weiterbildung der Erfindung ist vorgesehen, dass die Daten als Datenpakete übertragen werden und jedem Datenpaket ein Fehlerkorrekturwert zugeordnet wird. Das bedeutet, dass es in vorteilhafter Weise möglich ist, den Datenpaketen Redundanzinformationen in Form eines Fehlerkorrekturwertes hinzuzufügen, um dadurch die Redundanz bei der Übertragung der Daten über die beiden Übertragungsstrecken zu erhöhen. Diese Fehlerkorrekturwerte können nur denjenigen Datenpaketen zugeordnet werden, die über die eine oder die andere Übertragungsstrecke übertragen werden. Alternativ dazu ist es denkbar, dass die Fehlerkorrekturwerte den Datenpaketen zugeordnet werden, die über die zumindest beiden Übertragungsstrecken übertragen werden. Alternativ oder ergänzend ist es dazu selbstverständlich auch möglich, den Datenpaketen, die über die eine Übertragungsstrecke übertragen werden, andere Fehlerkorrekturwerte zuzuordnen, als denjenigen Datenpaketen, die über die erste Übertragungsstrecke übertragen werden. In Ergänzung dazu wird mit Hilfe der Fehlerkorrekturwerte ein Vorwärtsfehlerkorrekturverfahren durchgeführt. Mittels der Vorwärtsfehlerkorrektur (auch FEC für Forward Error Correction genannt) ist eine Möglichkeit gegeben, mit der die Fehlerrate bei der Übertragung von Daten, insbesondere digitalen Daten, die als Datenpakete übertragen werden, zu senken, sodass dadurch ein Fehlerkorrekturverfahren zur Verfügung steht. Wenn in einem Übertragungssystem eine solche Vorwärtsfehlerkorrektur eingesetzt wird, werden von dem Sender (Verdopplungsmittel) die zu übertragenden Datenpakete in redundanter Weise kodiert, sodass der Empfänger (Separiermittel) Übertragungsfehler ohne Rückfrage bei dem Sender erkennen und korrigieren kann. Bei den zu übertragenden Datenpaketen werden somit die Fehlerkorrekturwerte in Form zusätzlicher Bits hinzugefügt, die nach dem Übertragen über die eine Übertragungsstrecke zum Erkennen von Fehlern und gegebenenfalls zur Fehlerbeseitigung genutzt wird.

Nach der Erfindung wird sowohl aufgrund der mehrfachen Übertragung der Datenpakete über die gleiche Übertragungsstrecke als auch den Einsatz von Fehlerkorrekturwerten unter sicherheitskritischen Aspekten die Redundanz deutlich erhöht und sicherheitskritische Zustände, die aus einer fehlerhaften Datenübertragung resultieren könnten, ganz wesentlich verringert.

Das Verfahren ist besonders vorteilhaft in Bezug auf die Latenzzeit (Wartezeit) bei der Übertragung, hinsichtlich der Zuverlässigkeit und auch hinsichtlich des Datendurchsatzes bei der Übertragung von Daten zwischen den zumindest zwei Netzwerken von besonderem Vorteil.

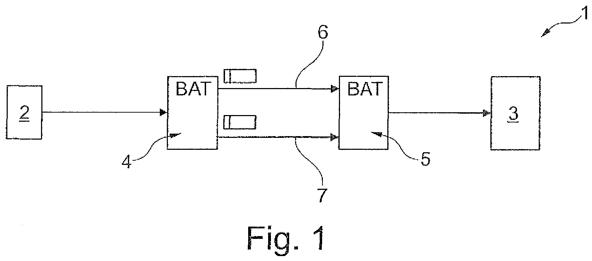

Das Verfahren kann auf einem Übertragungssystem, das in der Figur 1 dargestellt ist, durchgeführt werden.

Figur 1 zeigt eine prinzipielle Anordnung eines Übertragungssystems, welches zwei Netzwerke 2, 3 aufweist, die untereinander Daten austauschen sollen. Dieser Datenaustausch kann entweder unidirektional von dem Netzwerk 2 zu dem Netzwerk 3 (oder umgekehrt), genauso aber auch bidirektional zwischen den beiden Netzwerken 2, 3 erfolgen.

Bei den Netzwerken 2, 3 kann es sich um einfache oder komplexe Netzwerke, zum Beispiel in einer Ring- oder Linientopologie oder dergleichen, handeln. Es ist aber auch denkbar, dass ein solches Netzwerk 2, 3 nur ein einziges Element wie zum Beispiel einen Sensor, einen Aktor, ein Steuergerät oder dergleichen umfasst.

Um die Daten des Netzwerkes 2 zum Beispiel zu dem Netzwerk 3 zu übertragen, sind Verdopplungsmittel 4 vorhanden. Diese Verdopplungsmittel 4 teilen den zugeführten Datenstrom in zwei Datenströme auf. Ebenso erfolgt das Zusammenführen der beiden Datenströme nach deren Empfangen über Separiermittel 5, wobei die empfangenen Datenströme nach dem Zusammenführen an das Netzwerk 3 weitergeleitet werden.

Die Übertragung der Daten zwischen den Verdopplungsmittel und den Separiermitteln 5 erfolgt über zwei gleichartige oder voneinander unterschiedliche Übertragungsstrecken 6, 7 drahtlos mittels PRP. Die Drahtlosübertragung erfolgt in vorteilhafter Weise über Funkt, wobei eine optische Übertragung auch denkbar ist. Auch denkbar ist, dass die eine Übertragungsstrecke 6 eine Funkübertragungsstrecke und die zweite Übertragungsstrecke 7 eine optische Datenübertragungsstrecke ist. Sind beide Übertragungsstrecken 6, 7 zum Beispiel Funkübertragungsstrecken, können die Daten, genauer die Datenpakete, über diese beiden Funkübertragungsstrecken zum Beispiel auf gleicher Frequenz oder unterschiedlichen Frequenzen und ansonsten gleicher Parameter oder voneinander unterschiedlicher Übertragungsparameter übertragen werden. Gleichartige Übertragungsstrecken 6, 7 sind hinsichtlich ihres Aufbaues zu bevorzugen, wobei voneinander unterschiedliche Übertragungsstrecken 6, 7 (zum Beispiel optisch/Funk bzw. voneinander unterschiedliche Übertragungsparameter) hinsichtlich der Steigerung der Redundanz zu bevorzugen sind.

Nachdem die Daten von dem Erstnetzwerk 2 den Verdopplungsmitteln 4 (bei PRP auch als Redundancy Box bezeichnet) zugeführt worden sind, wird dort veranlasst, dass jedes Datenpaket mehrfach über die gleiche Übertragungsstrecke 6, 7 übertragen wird und/oder jedem Datenpaket ein Fehlerkorrekturwert zugeordnet wird. Anschließend erfolgt in entsprechender Weise die Übertragung der Datenpakete über die Übertragungsstrecken 6, 7, wobei die von den Separiermitteln 5 (im Falle von PRP auch als Redundancy Box bezeichnet) entsprechend ausgewertet, gegebenenfalls aufbereitet und als Datenpakete dem weiteren Netzwerk 3 zugeführt werden.

Die vorstehende Beschreibung der Figur 1 bezieht sich auf eine unidirektionale Datenübertragung von dem Erstnetzwerk 2 zu dem weiteren, insbesondere dem zweiten Netzwerk 3. Hierzu sind die Verdopplungsmittel 4 zum Aufteilen des Datenstromes und die Separiermittel 5 zum Zusammenführen des empfangenen Datenstromes ausgebildet.

Ist auch eine Datenübertragung von dem Netzwerk 3 zu dem Netzwerk 2 gewünscht, können weitere Verdopplungsmittel 4 bzw. Separiermittel 5 in dem Übertragungsweg zwischen dem Netzwerk 3 und dem Netzwerk 2 vorhanden sein, sodass sich ein doppelter Aufbau ergibt. Alternativ dazu können die Mittel 4, 5 auch dazu ausgebildet sein, nicht nur den zugeführten Datenstrom zu verdoppeln, sondern auch die über die Übertragungsstrecken 6, 7 zugeführten Datenströme zu separieren, was ebenso für die Separiermittel 5 gilt.

### Bezugszeichenliste

- 1.: Übertragungssystem
- 2.: Erstes Netzwerk
- 3.: Weiteres Netzwerk
- 4.: Verdopplungsmittel
- 5.: Separiermittel
- 6.: Erste Übertragungsstrecke
- 7.: Zweite Übertragungsstrecke

## Patentansprüche

1. Verfahren zum Betreiben eines Übertragungssystem (1), das ein erstes Ethernet-Netzwerk (2) und zumindest ein weiteres Ethernet-Netzwerk (3) aufweist, wobei zwischen diesen zumindest zwei Netzwerken (2, 3) dadurch Daten ausgetauscht werden, dass Daten des ersten Netzwerkes (2) Verdopplungsmitteln (4) zugeführt werden, wobei die zugeführten Daten über zumindest zwei Übertragungsstrecken (6, 7) drahtlos mittels Parallel Redundancy Protocol, PRP, zu Separiermitteln (5) übertragen und von den Separiermitteln (5) an das angeschlossene weitere Netzwerk (3) weitergeleitet werden, wobei die Daten als Datenpakete übertragen werden und jedes Datenpaket mehrfach über die gleiche Übertragungsstrecke (6, 7) übertragen wird, wobei eine Fehlererkennung und ein Rückkopplungsmechanismus vorgesehen ist, der das erneute Senden von Datenpaketen unterbindet, wenn ein Datenpaket als fehlerfrei übertragen erkannt worden ist.

2. Verfahren nach Anspruch 1, **dadurch gekennzeichnet, dass** jedes Datenpaket mindestens zwei Mal, über die gleiche Übertragungsstrecke (6, 7) übertragen wird.

3. Verfahren nach Anspruch 1, **dadurch gekennzeichnet, dass** jedes Datenpaket drei Mal über die gleiche Übertragungsstrecke (6, 7) übertragen wird.

4. Verfahren nach einem der vorhergehenden Ansprüche, **dadurch gekennzeichnet, dass** jedem Datenpaket ein Fehlerkorrekturwert zugeordnet wird und wobei mit Hilfe der Fehlerkorrekturwerte ein Vorwärtsfehlerkorrekturverfahren durchgeführt wird.

## Claims

1. Method for operating a transmission system (1) comprising a first Ethernet network (2) and at least one further Ethernet network (3), wherein data are interchanged between these at least two networks (2, 3) by virtue of data of the first network (2) being supplied to duplicating means (4), wherein the supplied data are wirelessly transmitted to separating means (5) via at least two transmission links (6, 7) by means of the parallel redundancy protocol, PRP, and forwarded to the connected further network (3) by the separating means (5), wherein the data are transmitted as data packets and each data packet is transmitted repeatedly via the same transmission link (6, 7), wherein provision is made of error detection and a feedback mechanism, which prevents data packets from being resent if a data packet has been recognized as having being transmitted without errors.

2. Method according to Claim 1, **characterized in that** each data packet is transmitted at least twice via the same transmission link (6, 7).

3. Method according to Claim 1, **characterized in that** each data packet is transmitted three times via the same transmission link (6, 7).

4. Method according to any of the preceding claims, **characterized in that** each data packet is assigned an error correction value, and wherein a forward error correction method is carried out with the aid of the error correction values.

## Revendications

1. Procédé permettant de faire fonctionner un système de transmission (1) qui présente un premier réseau Ethernet (2) et au moins un réseau Ethernet (3) supplémentaire, dans lequel entre ces au moins deux réseaux (2, 3) des données sont échangées en ce que des données du premier réseau (2) sont acheminées à des moyens de duplication (4), dans lequel les données acheminées sont transmises sans fil par l'intermédiaire d'au moins deux voies de transmission (6, 7) au moyen d'un protocole de redondance parallèle, PRP, à des moyens de séparation (5) et sont retransmises par les moyens de séparation (5) au réseau supplémentaire (3) connecté, dans lequel les données sont transmises sous forme de paquets de données et chaque paquet de données est transmis plusieurs fois sur la même voie de transmission (6, 7), dans lequel une identification d'erreur et un mécanisme de rétroaction qui interdit la réémission de paquets de données si un paquet de données a été identifié comme ayant été transmis sans erreur sont prévus.

2. Procédé selon la revendication 1, **caractérisé en ce que** chaque paquet de données est transmis au moins deux fois par la même voie de transmission (6, 7).

3. Procédé selon la revendication 1, **caractérisé en ce que** chaque paquet de données est transmis trois fois sur la même voie de transmission (6, 7).

4. Procédé selon l'une quelconque des revendications précédentes, **caractérisé en ce qu'**une valeur de correction d'erreur est associée à chaque paquet de données, et dans lequel un procédé d'autocorrection est exécuté à l'aide des valeurs de correction d'erreur.
